# EUROPEAN PATENT APPLICATION

(11) **EP 3 779 580 A1**
(43) Date of publication of application: **17.02.2021**
(21) Application number: 19830293.7
(22) Date of filing: 13.05.2019
(51) Int. Cl.: G02F 1/1333, G02F 1/13357

(54) **SCREEN ASSEMBLY AND ELECTRONIC DEVICE**

(30) Priority: 02.07.2018 CN 201810705406
(71) Applicant: GUANGDONG OPPO MOBILE TELECOMMUNICATIONS CORP., LTD., Wusha, Chang'an Dongguan Guangdong 523860 (CN)
(72) Inventor: TANG, Yimei, Dongguan, Guangdong 523860 (CN); CHENG, Jiao, Dongguan, Guangdong 523860 (CN); LIU, Min, Dongguan, Guangdong 523860 (CN); OUYANG, Zhibin, Dongguan, Guangdong 523860 (CN)
(74) Representative: Manitz Finsterwald Patent- und Rechtsanwaltspartnerschaft mbB
(86) International application number: PCT/CN2019/086629
(87) International publication number: WO 2020/007125

(57) **Abstract**

A screen assembly (10) and an electronic device (1) are provided. The screen assembly (10) includes a backlight module (100) and a display panel (200) stacked with the backlight module (100). The backlight module (100) includes a light guide plate (110). The light guide plate (110) includes a light incident surface (110a) and a light outgoing surface (110b) connected with the light incident surface (110a). The light guide plate (110) defines a first through hole (110A) extending through the light outgoing surface (110b). The light guide plate (110) includes a first light guide region (111). The first light guide region (111) is located between an inner wall surface (110e) of the first through hole (110A) and a surface of the light guide plate (110) away from the light incident surface (110a). The display panel (200) includes a first display region (200a) and a second display region (200b) connected with the first display region (200a). The first display region (200a) is disposed directly opposite the first light guide region (111). Multiple first pixels (310) arranged in a matrix are disposed in the first display region (200a). At least a part of the multiple first pixels (310) includes a red sub-pixel (311), a green sub-pixel (312), a blue sub-pixel (313), and a white sub-pixel (314), such that the first display region (200a) has light transmittance greater than the second display region (200b), it is helpful to improve display effect of the screen assembly (10).

## Description

### TECHNICAL FIELD

This disclosure relates to the technical field of electronics, and more particularly, to a screen assembly and an electronic device.

### BACKGROUND

With advancements in science and technology, electronic devices such as mobile phones and tablet computers are becoming more important in people's work and life. Consumers not only concern about the functions of electronic devices, but also have higher and higher requirements for the appearance of the electronic devices. A full-screen design with a very high screen-to-body ratio has attracted a larger number of users, and is deeply loved and sought after by the users.

### SUMMARY

A screen assembly is provided according to the disclosure. The screen assembly includes a backlight module and a display panel stacked with the backlight module. The backlight module includes a light guide plate. The light guide plate includes a light incident surface and a light outgoing surface connected with the light incident surface. The light guide plate defines a first through hole extending through the light outgoing surface. The light guide plate includes a first light guide region. The first light guide region is located between an inner wall surface of the first through hole and a surface of the light guide plate away from the light incident surface. The display panel includes a first display region and a second display region connected with the first display region. The first display region is disposed directly opposite the first light guide region. Multiple first pixels arranged in a matrix are disposed in the first display region. At least a part of the multiple first pixels includes a red sub-pixel, a green sub-pixel, a blue sub-pixel, and a white sub-pixel, such that the first display region has light transmittance greater than the second display region.

A screen assembly is further provided according to the disclosure. The screen assembly includes a backlight module, a light source, and a display panel stacked together. The backlight module includes a light guide plate. The light guide plate includes a light incident surface and a light outgoing surface connected with the light incident surface. The light source is disposed directly opposite the light incident surface. Light emitted from the light source passes through the light incident surface to enter the light guide plate, and then passes through the light outgoing surface to enter the display panel. The light guide plate defines a first through hole extending through the light outgoing surface. The light guide plate includes a first light guide region. The first light guide region is located at a side of an inner wall of the first through hole away from the light incident surface. The display panel has a first display region and a second display region connected with the first display region. The first display region is disposed directly opposite the first light guide region. Multiple first pixels arranged in a matrix are disposed in the first display region. At least a part of the multiple of first pixels includes a red sub-pixel, a green sub-pixel, a blue sub-pixel, and a white sub-pixel, such that the first display region has light transmittance greater than the second display region.

An electronic device is further provided according to the disclosure. The electronic device includes a front housing and a screen assembly fixedly connected to the front housing. The screen assembly includes a backlight module and a display panel stacked with the backlight module. The backlight module includes a light guide plate. The light guide plate includes a light incident surface and a light outgoing surface connected with the light incident surface. The light guide plate defines a first through hole extending through the light outgoing surface. The light guide plate includes a first light guide region. The first light guide region is located between an inner wall surface of the first through hole and a surface of the light guide plate away from the light incident surface. The display panel includes a first display region and a second display region connected with the first display region. The first display region is disposed directly opposite the first light guide region. Multiple first pixels arranged in a matrix are disposed in the first display region. At least a part of the multiple first pixels includes a red sub-pixel, a green sub-pixel, a blue sub-pixel, and a white sub-pixel, such that the first display region has light transmittance greater than the second display region.

### BRIEF DESCRIPTION OF THE DRAWINGS

To describe technical solutions in the implementations of the disclosure more clearly, the following briefly introduces the accompanying drawings required for describing the implementations. Apparently, the accompanying drawings in the following description merely illustrate some implementations of the disclosure. Those of ordinary skill in the art may also obtain other accompanying drawings based on these provided herein without creative efforts.
FIG. 1(a) is a schematic structural view of a screen assembly according to a first implementation of the disclosure.
FIG. 1(b) is a schematic structural view of a first pixel in the screen assembly illustrated in FIG. 1(a).
FIG. 2(a) is a schematic structural view of first pixels arranged in a first pixel region of a screen assembly according to a second implementation of the disclosure.
FIG. 2(b) is a schematic structural view of second pixels arranged in a second pixel region of the screen assembly according to the second implementation of the disclosure.
FIG. 3 is a schematic structural view illustrating an arrangement of first pixels in a screen assembly according to a third implementation of the disclosure.
FIG. 4 is a schematic structural view illustrating an arrangement of first pixels in a screen assembly according to a fourth implementation of the disclosure.
FIG. 5 is a schematic structural view illustrating an arrangement of first pixels in a screen assembly according to a fifth implementation of the disclosure.
FIG. 6 is a schematic structural view illustrating an arrangement of first pixels in a screen assembly according to a sixth implementation of the disclosure.
FIG. 7 is a schematic structural view of a display panel in a screen assembly according to a seventh implementation of the disclosure.
FIG. 8 is a schematic structural view of a display panel in a screen assembly according to an eighth implementation of the disclosure.
FIG. 9 is a schematic structural view illustrating a distribution of pixels in a display region of a screen assembly according to a ninth implementation of the disclosure.
FIG. 10 is a schematic structural view of a screen assembly according to a tenth implementation of the disclosure.
FIG. 11 is a schematic structural view of an electronic device according to a preferred implementation of the disclosure.

### DETAILED DESCRIPTION

In an aspect, a screen assembly is provided according to the disclosure. The screen assembly includes a backlight module and a display panel stacked with the backlight module. The backlight module includes a light guide plate. The light guide plate includes a light incident surface and a light outgoing surface connected with the light incident surface. The light guide plate defines a first through hole extending through the light outgoing surface. The light guide plate includes a first light guide region. The first light guide region is located between an inner wall surface of the first through hole and a surface of the light guide plate away from the light incident surface. The display panel includes a first display region and a second display region connected with the first display region. The first display region is disposed directly opposite the first light guide region. Multiple first pixels arranged in a matrix are disposed in the first display region. At least a part of the multiple first pixels includes a red sub-pixel, a green sub-pixel, a blue sub-pixel, and a white sub-pixel, such that the first display region has light transmittance greater than the second display region.

In a first possible implementation, the first display region includes multiple first pixel regions arranged in a matrix. The multiple first pixel regions are for arrangement of the first pixels. The second display region includes multiple second pixel regions arranged in a matrix. The multiple second pixel regions are for arrangement of second pixels. Each of the second pixels comprises a red sub-pixel, a green sub-pixel, and a blue sub-pixel, such that the second pixel region has light transmittance lower than the first pixel region.

In a second possible implementation, the white sub-pixel is attached to the blue sub-pixel, the white sub-pixel and the blue sub-pixel share a data line.

In a third possible implementation, the white sub-pixel is spaced apart from the blue sub-pixel. A black matrix is arranged between the white sub-pixel and the blue sub-pixel.

In a fourth possible implementation, each of the multiple first pixels includes the red sub-pixel, the green sub-pixel, the blue sub-pixel, and the white sub-pixel arranged in sequence. Sub-pixels of the same color in two adjacent first pixels are aligned with each other.

In a fifth possible implementation, the white sub-pixel includes a first white pixel, a second white pixel, and a third white pixel. The first white pixel is attached to the red sub-pixel. The second white pixel is attached to the green sub-pixel. The third white pixel is attached to the blue sub-pixel. The second white pixel has an area smaller than the first white pixel. The first white pixel has an area smaller than the third white pixel.

In combination with the fifth possible implementation, in a sixth possible implementation, the red sub-pixel and the green sub-pixel are located in a *m*^{th} row of a pixel group. The blue sub-pixel is located in a (*m*+1)^{th} row of the pixel group. The blue sub-pixel is located between the red sub-pixel and the green sub-pixel. The first white pixel is located on a surface of the red sub-pixel close to the green sub-pixel. The second white pixel is located on a surface of the green sub-pixel close to the red sub-pixel. The third white pixel is located on a surface of the blue sub-pixel close to a *m*^{th} row of sub-pixels, where *m* is a positive integer greater than or equal to one.

In a seventh possible implementation, the display panel includes an array substrate and a color filter substrate opposite the array substrate. The array substrate includes a thin film transistor layer on a surface close to the color filter substrate. The thin film transistor layer comprises metal traces. The array substrate further includes a color filter layer disposed on the thin film transistor layer. The color filter layer includes a red filter unit corresponding to the red sub-pixel, a green filter unit corresponding to the green sub-pixel, a blue filter unit corresponding to the blue sub-pixel, a white filter unit corresponding to the white sub-pixel, and black matrixes arranged between filter units. The black matrixes cover the metal traces.

In combination with the seventh possible implementation, in an eighth possible implementation, the display panel further includes a liquid crystal layer. A sealing member is disposed between the array substrate and the color filter substrate. The sealing member defines a second through hole aligned with the first through hole. The sealing member is configured to prevent liquid crystal molecules in the liquid crystal layer from entering the second through hole.

In a ninth possible implementation, the first display region includes multiple first pixel regions arranged in an array. The second display region includes multiple second pixel regions arranged in an array. Each of the multiple first pixel regions has light transmittance greater than each of the multiple second pixel regions.

In a tenth possible implementation, the screen assembly further includes a camera and a cover plate. The camera is at least partially received in the first through hole. The cover plate is disposed on a surface of the display panel away from the backlight module. A part of a surface of the cover plate away from the display panel serves as a light incident surface of the camera.

In another aspect, a screen assembly is further provided according to the disclosure. The screen assembly includes a backlight module, a light source, and a display panel stacked together. The backlight module includes a light guide plate. The light guide plate includes a light incident surface and a light outgoing surface connected with the light incident surface. The light source is disposed directly opposite the light incident surface. Light emitted from the light source passes through the light incident surface to enter the light guide plate, and then passes through the light outgoing surface to enter the display panel. The light guide plate defines a first through hole extending through the light outgoing surface. The light guide plate includes a first light guide region. The first light guide region is located at a side of an inner wall of the first through hole away from the light incident surface. The display panel has a first display region and a second display region connected with the first display region. The first display region is disposed directly opposite the first light guide region. Multiple first pixels arranged in a matrix are disposed in the first display region. At least a part of the multiple of first pixels includes a red sub-pixel, a green sub-pixel, a blue sub-pixel, and a white sub-pixel, such that the first display region has light transmittance greater than the second display region.

In a first possible implementation, multiple second pixels arranged in a matrix are disposed in the second display region. Each of the multiple second pixels includes a red sub-pixel, a green sub-pixel, and a blue sub-pixel, such that the second pixel region has light transmittance lower than the first pixel region.

In a second possible implementation, the white sub-pixel is attached to the blue sub-pixel, the white sub-pixel and the blue sub-pixel share a data line.

In a third possible implementation, the white sub-pixel is spaced apart from the blue sub-pixel, a black matrix is arranged between the white sub-pixel and the blue sub-pixel.

In a fourth possible implementation, each of the multiple first pixels comprises a red sub-pixel, a green sub-pixel, a blue sub-pixel, and a white sub-pixel arranged in sequence, and sub-pixels of the same color in two adjacent first pixels are aligned with each other.

In another aspect, an electronic device is further provided according to the disclosure. The electronic device includes a front housing and a screen assembly fixedly connected to the front housing. The screen assembly includes a backlight module and a display panel stacked with the backlight module. The backlight module includes a light guide plate. The light guide plate includes a light incident surface and a light outgoing surface connected with the light incident surface. The light guide plate defines a first through hole extending through the light outgoing surface. The light guide plate includes a first light guide region. The first light guide region is located between an inner wall surface of the first through hole and a surface of the light guide plate away from the light incident surface. The display panel includes a first display region and a second display region connected with the first display region. The first display region is disposed directly opposite the first light guide region. Multiple first pixels arranged in a matrix are disposed in the first display region. At least a part of the multiple first pixels includes a red sub-pixel, a green sub-pixel, a blue sub-pixel, and a white sub-pixel, such that the first display region has light transmittance greater than the second display region.

In a first possible implementation, the screen assembly further includes a light source. The light source is attached to the light incident surface to provide incident light to the light guide plate.

In a second possible implementation, the electronic device further includes a camera and a cover plate. The camera is at least partially received in the first through hole. The cover plate is disposed on a surface of the display panel away from the backlight module. A part of a surface of the cover plate away from the display panel serves as a light incident surface of the camera.

In combination with the second implementation, in a third implementation, the electronic device further includes a front housing and a rear cover. The rear cover defines a receiving space. The front housing is at least partially received in the receiving space. The front housing is connected to the rear cover. The screen assembly is connected to the front housing. The front housing abuts against the camera to limit the camera.

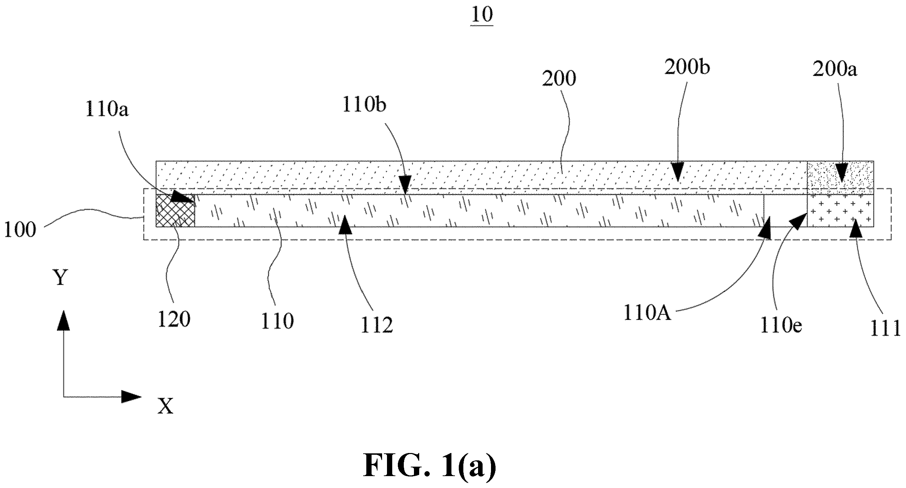

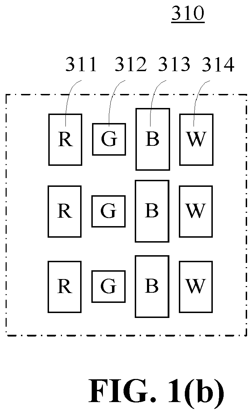

FIG. 1(a) is a schematic structural view of a screen assembly 10 according to a first implementation of the disclosure. FIG. 1(b) is a schematic structural view of a first pixel in the screen assembly 10 illustrated in FIG. 1(a). In this implementation, the screen assembly 10 includes a backlight module 100 and a display panel 200 stacked with the backlight module 100. The backlight module 100 includes a light guide plate 110. The light guide plate 110 includes a light incident surface 110a and a light outgoing surface 110b connected with the light incident surface 110a. The light guide plate 110 defines a first through hole 110A extending through the light outgoing surface 110b. The light guide plate 110 includes a first light guide region 111. The first light guide region 111 is located between an inner wall surface 110e of the first through hole 110A and a surface of the light guide plate 110 away from the light incident surface 110a. The display panel 200 includes a first display region 200a and a second display region 200b connected with the first display region 200a. The first display region 200a is disposed directly opposite the first light guide region 111. Multiple first pixels 310 arranged in a matrix are disposed in the first display region 200a. At least a part of the multiple first pixels 310 includes a red sub-pixel 311, a green sub-pixel 312, a blue sub-pixel 313, and a white sub-pixel 314, such that the first display region 200a has light transmittance greater than the second display region 200b.

In an implementation, the display panel 200 is a liquid crystal display panel.

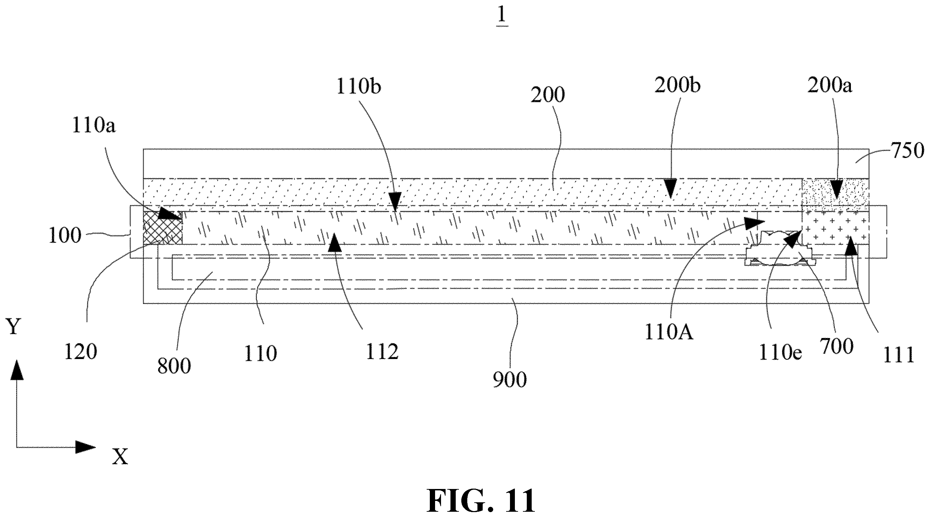

In an implementation, "light transmittance" refers to an ability of light to pass through a medium and is represented by a radio (e.g., percentage) of a luminous flux passing through a transparent or translucent body to an incident luminous flux. Light transmittance can indicate the efficiency of an electronic device 1 in light transmission (see FIG. 11), etc., which directly affects the visual effect of the display panel 200.

In an implementation, the light guide plate 110 is made of optical grade acrylic or polycarbonate (PC) sheet, and has high light transmittance and low power consumption.

The backlight module 100 further includes a second light guide region 112. The second light guide region 112 is connected with the first light guide region 111. The second light guide region 112 is disposed directly opposite the second display region 200b. The second light guide region 112 is located between the inner wall surface 110e and a first side surface. The second light guide region 112 is free from interference of the first through hole 110A, and thus light transmission in the second light guide region 112 is relatively uniform, that is, the brightness presented in the second light guide region 112 is relatively coordinated.

The backlight module 100 further includes a light source 120. The light source 120 is located on a side of the light guide plate 110. The side of the light guide plate 110 close to the light source 120 serves as the light incident surface 110a of the light guide plate 110. A side of the light guide plate 110 from which the light exits servers as the light outgoing surface 110b of the light guide plate 110.

In an implementation, the light guide plate 110 is a wedge-shaped plate, also called an inclined plate. Viewed from the light incident surface 110a, one side of the light guide plate 110 is relatively thick and the other side is relatively thin. The light guide plate 110 is in a wedge-shape or triangular shape. It is helpful to reduce light loss of the light source 120, improve light utilization efficiency, improve brightness and uniformity of the light source 120, and optimize light distribution.

At least a part of the multiple first pixels 310 includes the red sub-pixel 311 (R sub-pixel), the green sub-pixel 312 (G sub-pixel), the blue sub-pixel 313 (B sub-pixel), and the white sub-pixel 314 (W sub-pixel). The white sub-pixel 314 is capable of emitting white light. Multiple first pixels 310 arranged in a matrix are disposed in the first display region 200a. At least a part of the first pixels 310 includes the red sub-pixel 311, the green sub-pixel 312, the blue sub-pixel 313, and the white sub-pixel 314, which is possible to improve brightness of the first display region 200a and compensate brightness of the first light guide region 111 effectively, thereby enhancing the brightness of the first light guide region 111 and improving overall display effect of the screen assembly 10.

In an implementation, each of the multiple first pixels 310 includes the red sub-pixel 311, the green sub-pixel 312, the blue sub-pixel 313, and the white sub-pixel 314 arranged in sequence. Sub-pixels of the same color in two adjacent first pixels 310 are aligned with each other.

When sub-pixels of the same color in two adjacent rows or two columns of the first pixels 310 are in one-to-one correspondence, it allows the sub-pixels to be distributed more uniform. As a consequence, when the first pixels 310 are applied in the display panel 200, the red sub-pixel 311, the green sub-pixel 312, the blue sub-pixel 313, and the white sub-pixel 314 in this arrangement are uniformly distributed in the first pixel 310, such that the brightness presented by each red sub-pixel 311, each green sub-pixel 312, each blue sub-pixel 313, and each white sub-pixel 314 with respect to the display panel 200 is uniform. On the other hand, if the red sub-pixel 311, the green sub-pixel 312, the blue sub-pixel 313, and the white sub-pixel 314 are not arranged uniformly, it results unequal spacing among the red sub-pixel 311, the green sub-pixel 312, the blue sub-pixel 313, and the white sub-pixel 314, which causes that the brightness presented by each red sub-pixel 311, each green sub-pixel 312, each blue sub-pixel 313, and each white sub-pixel 314 with respect to the display panel 200 will be un-uniform, and the display panel 200 will appear jagged edges and color fringing. As a consequence, when the red sub-pixel 311, the green sub-pixel 312, the blue sub-pixel 313, and the white sub-pixel 314 in this arrangement are applied in the display panel 200, an image displayed by the display panel 200 is not prone to jagged edges and color fringing, improving the display quality of the image.

The screen assembly 10 provided herein includes the backlight module 100 and the display panel 200. The backlight module 100 includes the light guide plate 110. The light guide plate 110 includes the light incident surface 110a and the light outgoing surface 110b connected with the light incident surface 110a. The light guide plate 110 defines the first through hole 110A extending through the light outgoing surface 110b. The display panel 200 includes the first display region 200a and the second display region 200b connected with the first display region 200a. The first display region 200a is disposed facing the first light guide region 111. The first light guide region 111 is located between the inner wall surface 110e of the first through hole 110A and the surface of the light guide plate 110 away from the light incident surface 110a. Since the first light guide region 111 is located on a side of the first through hole 110A away from the light incident surface 110a, the amount of light in the first light guide region 111 is low. In this arrangement, it is possible to achieve brightness compensation for the first light guide region 111 through the first display region 200a, such that the brightness of the first light guide region 111 is improved, and the overall display effect of the screen assembly 10 is improved.

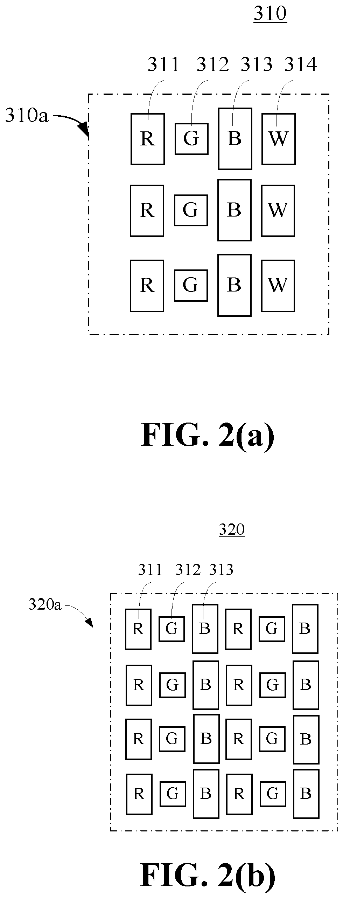

FIG. 2(a) is a schematic structural view of first pixels arranged in a first pixel region of the screen assembly 10 according to a second implementation of the disclosure. FIG. 2(b) is a schematic structural view of second pixels arranged in a second pixel region of the screen assembly 10 according to the second implementation of the disclosure. Referring to FIG. 1(a), FIG. 2(a), and FIG. 2(b), the screen assembly 10 in the second implementation is substantially identical with the screen assembly 10 in the first implementation in structure, except in the second implementation, the first display region 200a includes multiple first pixel regions 310a arranged in a matrix. The multiple first pixel regions 310a are for arrangement of the first pixels 310. The second display region 200b includes multiple second pixel regions 320a arranged in a matrix. The multiple second pixel regions 320a are for arrangement of second pixels 320. Each of the second pixels 320 includes the red sub-pixel 311, the green sub-pixel 312, and the blue sub-pixel 313, such that the second pixel region 320a has light transmittance lower than the first pixel region 310a.

In an implementation, an array arrangement may refer to a matrix arrangement, or an arrangement in which rows and columns are arranged according to a certain rule.

In an implementation, the second pixel 320 includes the red sub-pixel 311 (R sub-pixel), the green sub-pixel 312 (G sub-pixel), and the blue sub-pixel 313 (B sub-pixel). The first light guide region 111 is disposed facing the first display region 200a, and the second light guide region 112 is disposed facing the second display region 200b. Due to interference of the first through hole 110A, the first light guide region 111 is darker than the second light guide region 112. As a consequence, the first light guide region 111 needs more light compensation to improve its brightness. According to the technical solution of the disclosure, the first pixels 310 are arranged in the first display region 200a and at least a part of the first pixels 310 includes the red sub-pixel 311 (R sub-pixel), the green sub-pixel 312 (G sub-pixel), the blue sub-pixel 313 (B sub-pixel), and the white sub-pixel 314 (W sub-pixel), and the second pixels 320 are arranged in the second display region 200b and each of the second pixels 320 includes the red sub-pixel 311, the green sub-pixel 312, and the blue sub-pixel 313, such that the second pixel region 320a has light transmittance lower than the first pixel region 310a. Thus, more brightness compensation can be provided for the first light guide region 111 through the first display region 200a, which is helpful to improve the brightness of the first light guide region 111, thereby improving the overall display effect of the screen assembly 10.

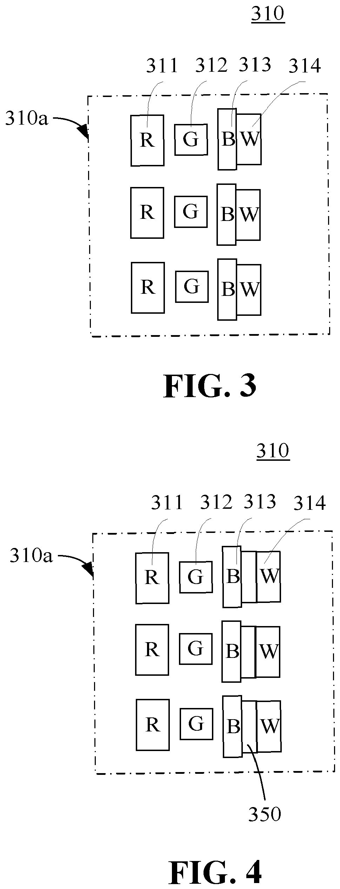

FIG. 3 is a schematic structural view illustrating an arrangement of first pixels in the screen assembly 10 according to a third implementation of the disclosure. Referring to FIG. 1(a) and FIG. 3, the screen assembly 10 in the third implementation is substantially identical with the screen assembly 10 in the first implementation in structure, except in the third implementation, the white sub-pixel 314 is in close contact with the blue sub-pixel 313. The white sub-pixel 314 and the blue sub-pixel 313 share a data line.

In an implementation, when the white sub-pixel 314 is in contact with the blue sub-pixel 313, it is possible to drive the white sub-pixel 314 and the blue sub-pixel 313 via the same driving circuit, such that the driving circuit for driving the white sub-pixel 314 and the blue sub-pixel 313 is simplified. In consequence, the white sub-pixel 314 can share the data line with the blue sub-pixel 313, thereby realizing multiplexing of the data line and reducing the design complexity of the driving circuit.

It is noted that, in other implementations, the white sub-pixel 314 may also be in contact with the red sub-pixel 311, or the white sub-pixel 314 may also be in contact with the green sub-pixel 312, both of which can simplify the complexity of the driving circuit to a certain extent.

FIG. 4 is a schematic structural view illustrating an arrangement of first pixels in the screen assembly 10 according to a fourth implementation of the disclosure. Referring to FIG. 1(a) and FIG. 4, the screen assembly 10 in the fourth implementation is substantially identical with the screen assembly 10 in the first implementation in structure, except in the fourth implementation, the white sub-pixel 314 is spaced apart from the blue sub-pixel 313. A black matrix 350 is arranged between the white sub-pixel 313 and the blue sub-pixel 350.

In this implementation, by arranging the black matrix 350 between the white sub-pixel 314 and the blue sub-pixel 313, mutual interference in light emission between the white sub-pixel 314 and the blue sub-pixel 313 can be prevented, which is helpful to improve the display effect of the screen assembly 10 and avoid the occurrence of cross-color.

It is noted that, in other implementations, the white sub-pixel 314 is spaced apart from the red sub-pixel 311. The black matrix 350 is arranged between the white sub-pixel 314 and the red sub-pixel 311. Alternatively or additionally, the white sub-pixel 314 is spaced apart from the green sub-pixel 312. The black matrix 350 is arranged between the white sub-pixel 314 and the green sub-pixel 312. On the one hand, it is possible to enhance the brightness of the first display region 200a, and then enhance the brightness of the first light guide region 111, thereby improving the overall display effect of the screen assembly 10. On the other hand, it is possible to avoid cross-color, which helps to further improve the display effect of the screen assembly 10.

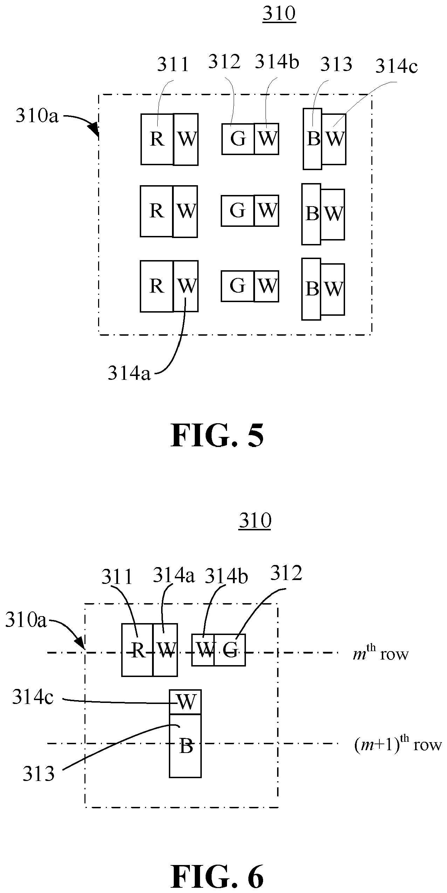

FIG. 5 is a schematic structural view illustrating an arrangement of first pixels in the screen assembly 10 according to a fifth implementation of the disclosure. Referring to FIG. 1(a) and FIG. 5, the screen assembly 10 in the fifth implementation is substantially identical with the screen assembly 10 in the first implementation in structure, except in the fifth implementation, the white sub-pixel 314 includes a first white pixel 314a, a second white pixel 314b, and a third white pixel 314c. The first white pixel 314a is in close contact with the red sub-pixel 311. The second white pixel 314b is in close contact with the green sub-pixel 312. The third white pixel 314c is in close contact with the blue sub-pixel 313. The second white pixel 314b has an area smaller than the first white pixel 314a. The first white pixel 314a has an area smaller than the third white pixel 314c.

Among the sub-pixels, the green sub-pixel 312 (G sub-pixel) has the highest luminous efficiency, the red sub-pixel 311 (R sub-pixel) has the second highest luminous efficiency, and the blue sub-pixel 313 (B sub-pixel) has the lowest luminous efficiency. For this reason, in this technical solution, the second white pixel 114b has an area smaller than the first white pixel 114a, and the first white pixel 114a has an area smaller than the third white pixel 114c. That is, in the white sub-pixel 314, the second white pixel 114b has the smallest area, the third white pixel 114c has the largest area, and the first white pixel 114a has area larger than the second white pixel 314b and smaller than the third white pixel 314c. In this implementation, the area of each of the first white pixel 314a, the second white pixel 314b, and the third white pixel 314c is set to correspond to the luminous efficiency of each of the red sub-pixel 311, the green sub-pixel 312, and the blue sub-pixel 313, such that a difference in the luminous brightness among the first white pixel 314a, the second white pixel 314b, and the third white pixel 314c falls within a preset range. The area of each sub-pixel is not determined arbitrarily, on the contrary, the area is set to match a setting of the luminous efficiency of each sub-pixel. It is noted that, when the area of each sub-pixel matches the luminous efficiency thereof, and the difference in the luminous brightness among the first white pixel 314a, the second white pixel 314b, and the third white pixel 314c falls within the preset range, it is considered that requirements are met. As such, it is possible to allow the first white pixel 314a, the second white pixel 314b, and the third white pixel 314c disposed in the first pixel region 310a to have relatively coordinated brightness, which is helpful to increase a resolution of the first pixel region 310a and increase a resolution of the first display region 200a, such that a clearer image can be displayed by the first display region 200a.

In an implementation, when the first white pixel 314a is in close contact with the red sub-pixel 311, the second white pixel 314b is in close contact with the green sub-pixel 312, and the third white pixel 314c is in close contact with the blue sub-pixel 313, the first white pixel 314a and the red sub-pixel 311 can share a data line, the second white pixel 314b and the green sub-pixel 312 can share a data line, and the third white pixel 314c and the blue sub-pixel 313 can share a data line, such that multiplexing of data lines can be realized, which helps to simplify the driving circuit.

FIG. 6 is a schematic structural view illustrating an arrangement of first pixels in the screen assembly 10 according to a sixth implementation of the disclosure. Referring to FIG. 1(a) and FIG. 6, the screen assembly 10 in the sixth implementation is substantially identical with the screen assembly 10 in the fifth implementation in structure, except in the sixth implementation, the red sub-pixel 311 and the green sub-pixel 312 are located in a *m*^{th} row of a pixel group. The blue sub-pixel 313 is located in a (*m*+1)^{th} row of the pixel group. The blue sub-pixel 313 is located between the red sub-pixel 311 and the green sub-pixel 312. The first white pixel 314a is located on a surface of the red sub-pixel 311 close to the green sub-pixel 312. The second white pixel 314b is located on a surface of the green sub-pixel 312 close to the red sub-pixel 311. The third white pixel 314c is located on a surface of the blue sub-pixel 313 close to a *m*^{th} row of sub-pixels, where *m* is a positive integer greater than or equal to one.

In this technical solution, in two adjacent rows or columns of pixels, the red sub-pixel 311, the green sub-pixel 312, and the blue sub-pixel 313 can form a pixel together, thereby realizing function multiplexing of each sub-pixel and improving display efficiency of pixels. In an implementation, when the first white pixel 314a is located on the surface of the red sub-pixel 311 close to the green sub-pixel 312, the second white pixel 314b is located on the surface of the green sub-pixel 312 close to the red sub-pixel 311, the third white pixel 314c is located on the surface of the blue sub-pixel 313 close to the *m*^{th} row of sub-pixels, it is helpful to allow a more uniform local distribution of the red sub-pixel 311, the green sub-pixel 312, the blue sub-pixel 313, the first white pixel 314a, the second white pixel 314b, and the third white pixel 314c, which in turn enables the red sub-pixel 311, the green sub-pixel 312, the blue sub-pixel 313, the first white pixel 314a, the second white pixel 314b, and the third white pixel 314c to provide more uniform light emission. When pixels in above arrangement are applied to the display panel 200, the image displayed by the display panel 200 is not prone to jagged edges and color fringing, thereby improving the display quality of the image.

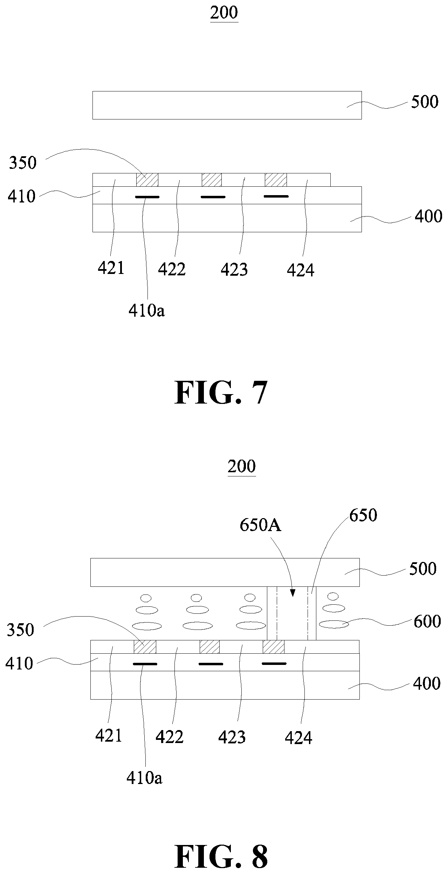

FIG. 7 is a schematic structural view of the display panel 200 in the screen assembly 10 according to a seventh implementation of the disclosure. Referring to FIG. 1(a), FIG. 1(b), and FIG. 7, the screen assembly 10 in the seventh implementation is substantially identical with the screen assembly 10 in the first implementation in structure, except in the seventh implementation, the display panel 200 includes an array substrate 400 and a color filter substrate 500 opposite the array substrate 400. The array substrate 400 includes a thin film transistor layer 410 on a surface close to the color filter substrate 410. The thin film transistor layer 410 includes metal traces 410a. The array substrate 400 further includes a color filter layer 420 disposed on the thin film transistor layer 410. The color filter layer 420 includes a red filter unit 421 corresponding to the red sub-pixel 311, a green filter unit 422 corresponding to the green sub-pixel 312, a blue filter unit 423 corresponding to the blue sub-pixel 313, a white filter unit 424 corresponding to the white sub-pixel 314, and black matrixes 350 arranged among filter units. The black matrixes 350 cover the metal traces 410a.

In an implementation, the metal traces 410a may be scanning lines or data lines, and may also be clock signal lines.

In an implementation, the red filter unit 421 is a red color resistance, the green filter unit 422 is a green color resistance, and the blue filter unit 423 is a blue color resistance. The black matrix 350 is arranged between each two adjacent filter units. The black matrixes 350 are used to cover the metal traces 410a, and to block light crosstalk between two adjacent filter units, in this way, color collision between adjacent sub-pixels, which will affect the display effect of the screen assembly 10, can be avoided.

FIG. 8 is a schematic structural view of the display panel 200 in the screen assembly 10 according to an eighth implementation of the disclosure. Referring to FIG. 1(a), FIG. 1(b), and FIG. 8, the screen assembly 10 in the eighth implementation is substantially identical with the screen assembly 10 in the seventh implementation in structure, except in the eighth implementation, the display panel 200 further includes a liquid crystal layer 600. A sealing member 650 is disposed between the array substrate 400 and the color filter substrate 500. The sealing member 650 defines a second through hole 650A aligned with the first through hole 110A. The sealing member 650 is configured to prevent liquid crystal molecules in the liquid crystal layer 600 from entering the second through hole 650A.

The sealing member 650 has a cylindrical structure. There is no liquid crystal molecule arranged inside the sealing member 650, that is, no liquid crystal molecule is arranged in the second through hole 650A. Since the second through hole 650A is directly opposite the first through hole 110A, the liquid crystal molecules in the second through hole 650A are prevented from affecting the display effect of the display panel 200, which is helpful to improve the display effect of the screen assembly 10.

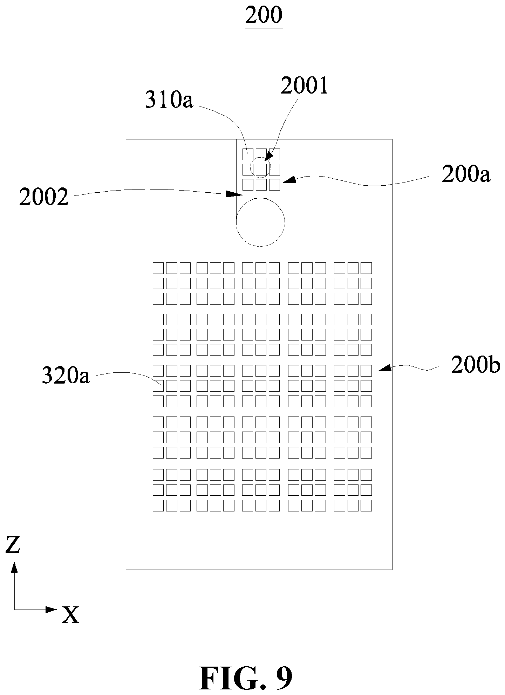

FIG. 9 is a schematic structural view illustrating a distribution of pixels in a display region of the screen assembly 10 according to a ninth implementation of the disclosure. Referring to FIG. 1(a), FIG. 1(b), and FIG. 9, the screen assembly 10 in the ninth implementation is substantially identical with the screen assembly 10 in the first implementation in structure, except in the ninth implementation, the first display region 200a includes multiple first pixel regions 310a arranged in an array. The second display region 200b includes multiple second pixel regions 320a arranged in an array. Each of the multiple first pixel regions 310a has light transmittance greater than each of the multiple second pixel regions 320a.

In an implementation, the first display region 200a includes a first central region 2001 and a first edge region 2002 surrounding the first central region 2001. The first pixel region 310a in the first central region 2001 has light transmittance greater than the first pixel region 310a in the first edge region 2002.

In an implementation, the first central region 2001 is directly opposite a central portion of the first light guide region 111. The central portion of the first light guide region 111 has a brightness lower than an edge portion of the first light guide region 111. That is, compared to the edge portion of the first light guide region 111, the central portion of the first light guide region 111 is darker, and thus the central portion of the first guide region 111 needs more light compensation from the first display region 200a, so as to enhance the brightness of the central portion of the first light guide region 111.

In an implementation, when the first central region 2001 has an area equal to the first edge region 2002, the first central region 2001 has more first pixel regions 310a than the first edge region 2002. When the first central region 2001 has an area different to the first edge region 2002, a distance between each adjacent two of the multiple first pixel regions 310a in the first central region 2001 is smaller than a distance between each adjacent two of the multiple first pixel regions 310a in the first edge region 2002, such that each of the first pixel regions 310a in the first central region 2001 has light transmittance greater than each of the first pixel regions 310a in the first edge region 2002. When each of the first pixel regions 310a in the first central region 2001 has the light transmittance greater than each of the first pixel regions 310a in the first edge region 2002, it is possible to effectively enhance the brightness of the first central region 2001. The first central region 2001 is directly opposite the central portion of the first light guide region 111, and thus it is possible to compensate brightness of the central portion of the first light guide region 111, so as to improve the brightness of the central portion of the first guide region 111, and allow the brightness of the screen assembly 10 to be further coordinated, thereby improving the display effect of the screen assembly 10.

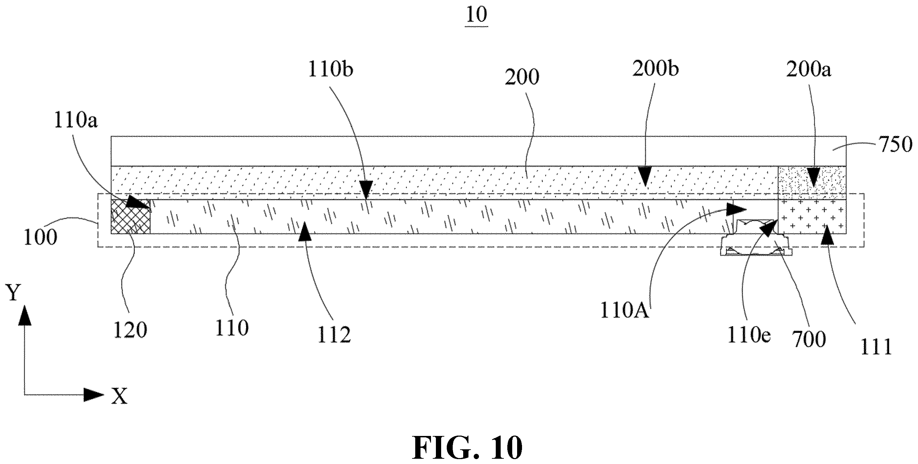

FIG. 10 is a schematic structural view of the screen assembly 10 according to a tenth implementation of the disclosure. The screen assembly 10 in the tenth implementation is substantially identical with the screen assembly 10 in the first implementation in structure, except in the tenth implementation, the screen assembly 10 further includes a camera 700 and a cover plate 750. The camera 700 is at least partially received in the first through hole 110A. The cover plate 750 is disposed on a surface of the display panel 200 away from the backlight module 100. Apart of a surface of the cover plate 750 away from the display panel 200 serves as a light incident surface 700a of the camera 700.

The camera 700 is a front camera.

In an implementation, the cover plate 750 is made of glass, and its main component is silicon dioxide (SiO₂), which can protects internal structures of the electronic device 1 (see FIG. 11).

Referring to FIG. 1(a) and FIG. 1(b), in this implementation, the screen assembly 10 includes a backlight module 100, a light source 120, and a display panel 200 stacked together. The backlight module 100 includes a light guide plate 110. The light guide plate 110 includes a light incident surface 110a and a light outgoing surface 110b connected with the light incident surface 110a. The light source 120 is disposed directly opposite the light incident surface 110a. Light emitted from the light source 120 passes through the light incident surface 110a to enter the light guide plate 110, and then passes through the light outgoing surface 110b to enter the display panel 200. The light guide plate 110 defines a first through hole 110A extending through the light outgoing surface 110b. The light guide plate 110 includes a first light guide region 111. The first light guide region 111 is located at a side of an inner wall 110e of the first through hole 110A away from the light incident surface 110a. The display panel 200 has a first display region 200a and a second display region 200b connected with the first display region 200a. The first display region 200a is disposed directly opposite the first light guide region 111. Multiple first pixels 310 arranged in a matrix are disposed in the first display region 200a. At least a part of the multiple first pixels 310 includes a red sub-pixel 311, a green sub-pixel 312, a blue sub-pixel 313, and a white sub-pixel 214, such that the first display region 200a has light transmittance greater than the second display region 200b.

In an implementation, the display panel 200 is a liquid crystal display panel.

In an implementation, "light transmittance" refers to an ability of light to pass through a medium and is represented by a radio (e.g., percentage) of a luminous flux passing through a transparent or translucent body to an incident luminous flux. Light transmittance can indicate the efficiency of the electronic device 1 in light transmission (see FIG. 11), etc., which directly affects the visual effect of the display panel 200.

In an implementation, the light guide plate 110 is made of optical grade acrylic or polycarbonate (PC) sheet, and has high light transmittance and low power consumption.

The backlight module 100 further includes the second light guide region 112. The second light guide region 112 is connected with the first light guide region 111. The second light guide region 112 is disposed directly opposite the second display region 200b. The second light guide region 112 is located between the inner wall surface 110e and the first side surface. The second light guide region 112 is free from interference of the first through hole 110A, and thus light transmission in the second light guide region 112 is relatively uniform, that is, the brightness presented in the second light guide region 112 is relatively coordinated.

The light source 120 is located on a side of the light guide plate 110. The side of the light guide plate 110 close to the light source 120 serves as the light incident surface 110a of the light guide plate 110. A side of the light guide plate 110 from which the light exits servers as the light outgoing surface 110b of the light guide plate 110.

In an implementation, the light guide plate 110 is a wedge-shaped plate, also called an inclined plate. Viewed from the light incident surface 110a, one side of the light guide plate 110 is relatively thick and the other side is relatively thin. The light guide plate 110 is in a wedge-shape or triangular shape. It is helpful to reduce light loss of the light source 120, improve light utilization efficiency, improve brightness and uniformity of the light source 120, and optimize light distribution.

At least a part of the multiple first pixels 310 includes the red sub-pixel 311 (R sub-pixel), the green sub-pixel 312 (G sub-pixel), the blue sub-pixel 313 (B sub-pixel), and the white sub-pixel 314 (W sub-pixel). The white sub-pixel 314 is capable of emitting white light. Multiple first pixels 310 arranged in a matrix are disposed in the first display region 200a. At least a part of the first pixels 310 includes the red sub-pixel 311, the green sub-pixel 312, the blue sub-pixel 313, and the white sub-pixel 314, which is possible to improve the brightness of the first display region 200a and compensate the brightness of the first light guide region 111 effectively, thereby enhancing the brightness of the first light guide region 111 and improving the overall display effect of the screen assembly 10.

In an implementation, each of the multiple first pixels 310 includes the red sub-pixel 311, the green sub-pixel 312, the blue sub-pixel 313, and the white sub-pixel 314 arranged in sequence. Sub-pixels of the same color in two adjacent first pixels 310 are aligned with each other.

When sub-pixels of the same color in two adjacent rows or two columns of the first pixels 310 are in one-to-one correspondence, it allows the sub-pixels to be distributed more uniform. As a consequence, when the first pixels 310 are applied in the display panel 200, the red sub-pixel 311, the green sub-pixel 312, the blue sub-pixel 313, and the white sub-pixel 314 in this arrangement are uniformly distributed in the first pixel 310, such that the brightness presented by each red sub-pixel 311, each green sub-pixel 312, each blue sub-pixel 313, and each white sub-pixel 314 with respect to the display panel 200 is uniform. On the other hand, if the red sub-pixel 311, the green sub-pixel 312, the blue sub-pixel 313, and the white sub-pixel 314 are not arranged uniformly, it results unequal spacing among the red sub-pixel 311, the green sub-pixel 312, the blue sub-pixel 313, and the white sub-pixel 314, which causes that the brightness presented by each red sub-pixel 311, each green sub-pixel 312, each blue sub-pixel 313, and each white sub-pixel 314 with respect to the display panel 200 will be un-uniform, and the display panel 200 will appear jagged edges and color fringing. As a consequence, when the red sub-pixel 311, the green sub-pixel 312, the blue sub-pixel 313, and the white sub-pixel 314 in this arrangement are applied in the display panel 200, the image displayed by the display panel 200 is not prone to jagged edges and color fringing, improving the display quality of the image.

Referring to FIG. 1(a), FIG. 2(a), and FIG. 2(b), the second pixels 320 arranged in a matrix are disposed in the second display region 200b. Each of the second pixels 320 includes the red sub-pixel 311, the green sub-pixel 312, and the blue sub-pixel 313, such that the second pixel region 320a has the light transmittance lower than the first pixel region 310a.

In an implementation, an array arrangement may refer to a matrix arrangement, or an arrangement in which rows and columns are arranged according to a certain rule.

In an implementation, the second pixel 320 includes the red sub-pixel 311 (R sub-pixel), the green sub-pixel 312 (G sub-pixel), and the blue sub-pixel 313 (B sub-pixel). The first light guide region 111 is disposed facing the first display region 200a, and the second light guide region 112 is disposed facing the second display region 200b. Due to interference of the first through hole 110A, the first light guide region 111 is darker than the second light guide region 112. As a consequence, the first light guide region 111 needs more light compensation to improve its brightness. According to the technical solution of the disclosure, the first pixels 310 are disposed in the first display region 200a and at least a part of the first pixels 310 includes the red sub-pixel 311 (R sub-pixel), the green sub-pixel 312 (G sub-pixel), the blue sub-pixel 313 (B sub-pixel), and the white sub-pixel 314 (W sub-pixel), and the second pixels 320 are disposed in the second display region 200b and each of the second pixels 320 includes the red sub-pixel 311, the green sub-pixel 312, and the blue sub-pixel 313, such that the second pixel region 320a has light transmittance lower than the first pixel region 310a. Thus, more brightness compensation can be provided for the first light guide region 111 through the first display region 200a, which is helpful to enhance the brightness of the first light guide region 111, thereby improving the overall display effect of the screen assembly 10.

Referring to FIG. 1(a) and FIG. 3, the white sub-pixel 314 is in close contact with the blue sub-pixel 313. The white sub-pixel 314 and the blue sub-pixel 313 share a data line.

In an implementation, when the white sub-pixel 314 is in contact with the blue sub-pixel 313, it is possible to drive the white sub-pixel 314 and the blue sub-pixel 313 via the same driving circuit, such that the driving circuit for driving the white sub-pixel 314 and the blue sub-pixel 313 is simplified. In consequence, the white sub-pixel 314 can share the data line with the blue sub-pixel 313, thereby realizing the multiplexing of the data line and reducing the design of complexity of the driving circuit.

It is noted that, in other implementations, the white sub-pixel 314 may also be in contact with the red sub-pixel 311, or the white sub-pixel 314 may also be in contact with the green sub-pixel 312, both of which can simplify the complexity of the driving circuit to a certain extent.

Referring to FIG. 1(a) and FIG. 4, the white sub-pixel 314 is spaced apart from the blue sub-pixel 313. The black matrix 350 is arranged between the white sub-pixel 313 and the blue sub-pixel 350.

In this implementation, by arranging the black matrix 350 between the white sub-pixel 314 and the blue sub-pixel 313, mutual interference in light emission between the white sub-pixel 314 and the blue sub-pixel 313 can be prevented, which is helpful to improve the display effect of the screen assembly 10 and avoid the occurrence of cross-color.

It is noted that, in other implementations, the white sub-pixel 314 is spaced apart from the red sub-pixel 311. The black matrix 350 is arranged between the white sub-pixel 314 and the red sub-pixel 311. Alternatively or additionally, the white sub-pixel 314 is spaced apart from the green sub-pixel 312. The black matrix 350 is arranged between the white sub-pixel 314 and the green sub-pixel 312. On the one hand, it is possible to enhance the brightness of the first display region 200a, and then enhance the brightness of the first light guide region 111, thereby improving the overall display effect of the screen assembly 10. On the other hand, it is possible to avoid the cross-color, which helps to further improve the display effect of the screen assembly 10.

FIG. 11 is a schematic structural view of the electronic device 1 according to a preferred implementation of the disclosure. The electronic device 1 includes the screen assembly 10 provided in any of the above implementations.

The electronic device 1 may be any device with shooting function such as a tablet computer, a mobile phone, an e-reader, a remote control, a personal computer (PC), a notebook computer, an in-vehicle device, an internet television, a wearable device, and the like.

The electronic device 1 further includes a front housing 800 and a rear cover 900 stacked with the front housing 800. The rear cover 900 defines a receiving space. The front housing 800 is at least partially received in the receiving space. The front housing 800 is connected to the rear cover 900. The screen assembly 10 is connected to the front housing 800. The front housing 800 abuts against the camera 700 to limit the camera 700.

The front housing 800 is disposed on a side of the backlight module 100 away from the cover plate 750. The front housing 800 is used to fix the camera 700. The screen assembly 10 is fixedly connected to the front housing 800. The camera 700 is at least partially received in the first through hole 110A. The cover plate 750 is disposed on a surface of the display panel 200 away from the backlight module 100. A part of a surface of the cover plate 750 away from the display panel 200 serves as a light incident surface of the camera 700.

The rear cover 900 is disposed on a side of the front housing 800 away from the backlight module 100. The rear cover 900 serves as a battery cover of the electronic device 1.

The implementations of the disclosure are described in detail above, and specific examples are used herein to illustrate the principles and implementations of the disclosure. The descriptions of the above implementations are merely used to help understand methods and core ideas of the disclosure. At the same time, modifications in specific implementations and application ranges will be made by those of ordinary skill in the art according to the idea of the disclosure. From the above, the content of this specification should not be construed as a limitation of the disclosure.

## Claims

1. A screen assembly, comprising a backlight module and a display panel stacked with the backlight module, wherein
the backlight module comprises a light guide plate, wherein
the light guide plate comprises a light incident surface and a light outgoing surface connected with the light incident surface;
the light guide plate defines a first through hole extending through the light outgoing surface; and
the light guide plate comprises a first light guide region, the first light guide region being located between an inner wall surface of the first through hole and a surface of the light guide plate away from the light incident surface;
the display panel comprises a first display region and a second display region connected with the first display region, wherein
the first display region is disposed directly opposite the first light guide region; and
a plurality of first pixels arranged in a matrix are disposed in the first display region, wherein at least a part of the plurality of first pixels comprises a red sub-pixel, a green sub-pixel, a blue sub-pixel, and a white sub-pixel, such that the first display region has light transmittance greater than the second display region.

2. The screen assembly of claim 1, wherein
the first display region comprises a plurality of first pixel regions arranged in a matrix, wherein the plurality of first pixel regions are for arrangement of the plurality of first pixels; and
the second display region comprises a plurality of second pixel regions arranged in a matrix, wherein the plurality of second pixel regions are for arrangement of a plurality of second pixels, and each of the plurality of the second pixels comprises a red sub-pixel, a green sub-pixel, and a blue sub-pixel, such that each of the plurality of second pixel regions has light transmittance lower than each of the plurality of the first pixel region.

3. The screen assembly of claim 1, wherein the white sub-pixel is attached to the blue sub-pixel, the white sub-pixel and the blue sub-pixel share a data line.

4. The screen assembly of claim 1, wherein the white sub-pixel is spaced apart from the blue sub-pixel, a black matrix is arranged between the white sub-pixel and the blue sub-pixel.

5. The screen assembly of claim 1, wherein each of the plurality of first pixels comprises the red sub-pixel, the green sub-pixel, the blue sub-pixel, and the white sub-pixel arranged in sequence, and sub-pixels of the same color in two adjacent first pixels are aligned with each other.

6. The screen assembly of claim 1, wherein
the white sub-pixel comprises a first white pixel, a second white pixel, and a third white pixel;
the first white pixel is attached to the red sub-pixel, the second white pixel is attached to the green sub-pixel, and the third white pixel is attached to the blue sub-pixel; and
the second white pixel has an area smaller than the first white pixel, the first white pixel has an area smaller than the third white pixel.

7. The screen assembly of claim 6, wherein
the red sub-pixel and the green sub-pixel are located in a *m*^{th} row of a pixel group, the blue sub-pixel is located in a (*m*+1)^{th} row of the pixel group;
the blue sub-pixel is located between the red sub-pixel and the green sub-pixel;
the first white pixel is located on a surface of the red sub-pixel close to the green sub-pixel, the second white pixel is located on a surface of the green sub-pixel close to the red sub-pixel, and the third white pixel is located on a surface of the blue sub-pixel close to a *m*^{th} row of sub-pixels, wherein *m* is a positive integer greater than or equal to one.

8. The screen assembly of claim 1, wherein
the display panel comprises an array substrate and a color filter substrate opposite the array substrate;
the array substrate comprises a thin film transistor layer on a surface close to the color filter substrate, wherein the thin film transistor layer comprises metal traces; and
the array substrate further comprises a color filter layer disposed on the thin film transistor layer, wherein the color filter layer comprises a red filter unit corresponding to the red sub-pixel, a green filter unit corresponding to the green sub-pixel, a blue filter unit corresponding to the blue sub-pixel, a white filter unit corresponding to the white sub-pixel, and black matrixes arranged between filter units, and wherein the black matrixes cover the metal traces.

9. The screen assembly of claim 8, wherein
the display panel further comprises a liquid crystal layer; and
a sealing member is disposed between the array substrate and the color filter substrate, wherein the sealing member defines a second through hole aligned with the first through hole, and wherein the sealing member is configured to prevent liquid crystal molecules in the liquid crystal layer from entering the second through hole.

10. The screen assembly of claim 1, wherein the first display region comprises a plurality of first pixel regions arranged in an array, and the second display region comprises a plurality of second pixel regions arranged in an array, and wherein each of the plurality of first pixel regions has light transmittance greater than each of the plurality of second pixel regions.

11. The screen assembly of claim 1, further comprising a camera and a cover plate, wherein
the camera is at least partially received in the first through hole;
the cover plate is disposed on a surface of the display panel away from the backlight module; and
a part of a surface of the cover plate away from the display panel serves as a light incident surface of the camera.

12. A screen assembly, wherein
the screen assembly comprises a backlight module, a light source, and a display panel stacked together;
the backlight module comprises a light guide plate, wherein the light guide plate comprises a light incident surface and a light outgoing surface connected with the light incident surface, and wherein the light source is disposed directly opposite the light incident surface, light emitted from the light source passes through the light incident surface to enter the light guide plate, and then passes through the light outgoing surface to enter the display panel;
the light guide plate defines a first through hole extending through the light outgoing surface;
the light guide plate comprises a first light guide region, wherein the first light guide region is located at a side of an inner wall of the first through hole away from the light incident surface; and
the display panel has a first display region and a second display region connected with the first display region, wherein
the first display region is disposed directly opposite the first light guide region; and
a plurality of first pixels arranged in a matrix are disposed in the first display region, wherein at least a part of the plurality of first pixels comprises a red sub-pixel, a green sub-pixel, a blue sub-pixel, and a white sub-pixel, such that the first display region has light transmittance greater than the second display region.

13. The screen assembly of claim 12, wherein
a plurality of second pixels arranged in a matrix are disposed in the second display region, wherein each of the plurality of second pixels comprises a red sub-pixel, a green sub-pixel, and a blue sub-pixel, such that a second pixel region has light transmittance lower than a first pixel region.

14. The screen assembly of claim 12, wherein the white sub-pixel is attached to the blue sub-pixel, the white sub-pixel and the blue sub-pixel share a data line.

15. The screen assembly of claim 12, wherein the white sub-pixel is spaced apart from the blue sub-pixel, a black matrix is arranged between the white sub-pixel and the blue sub-pixel.

16. The screen assembly of claim 12, wherein each of the plurality of first pixels comprises a red sub-pixel, a green sub-pixel, a blue sub-pixel, and a white sub-pixel arranged in sequence, and sub-pixels of the same color in two adjacent first pixels are aligned with each other.

17. An electronic device, comprising a front housing and a screen assembly fixedly connected to the front housing, the screen assembly comprises a backlight module and a display panel stacked with the backlight module, wherein
the backlight module comprises a light guide plate, wherein
the light guide plate comprises a light incident surface and a light outgoing surface connected with the light incident surface;
the light guide plate defines a first through hole extending through the light outgoing surface; and
the light guide plate comprises a first light guide region, the first light guide region being located between an inner wall surface of the first through hole and a surface of the light guide plate away from the light incident surface; and
the display panel comprises a first display region and a second display region connected with the first display region, wherein
the first display region is disposed directly opposite the first light guide region; and
a plurality of first pixels arranged in a matrix are disposed in the first display region, wherein at least a part of the plurality of first pixels comprises a red sub-pixel, a green sub-pixel, a blue sub-pixel, and a white sub-pixel, such that the first display region has light transmittance greater than the second display region.

18. The electronic device of claim 17, wherein the screen assembly further comprises a light source, and the light source is attached to the light incident surface to provide incident light to the light guide plate.

19. The electronic device of claim 17, further comprising a camera and a cover plate, wherein
the camera is at least partially received in the first through hole;
the cover plate is disposed on a surface of the display panel away from the backlight module; and
a part of a surface of the cover plate away from the display panel serves as a light incident surface of the camera.

20. The electronic device of claim 19, further comprising a front housing and a rear cover, wherein
the rear cover defines a receiving space, the front housing is at least partially received in the receiving space;
the front housing is connected to the rear cover, and the screen assembly is connected to the front housing; and
the front housing abuts against the camera to limit the camera.
